Europäisches Patentamt

European Patent Office

Office européen des brevets

(19)

(11) Veröffentlichungsnummer: **0 412 930 A1**

## (12) EUROPÄISCHE PATENTANMELDUNG

(21) Anmeldenummer: 90810536.4

(22) Anmeldetag: 12.07.90

(51) Int. Cl.⁵: **C04B 38/00**, B01D 39/20, B28B 1/00, B28B 7/34

(30) Priorität: 08.08.89 CH 2926/89

(43) Veröffentlichungstag der Anmeldung:
13.02.91 Patentblatt 91/07

(84) Benannte Vertragsstaaten:
AT BE CH DE DK ES FR GB GR IT LI LU NL SE

(71) Anmelder: ALUSUISSE-LONZA SERVICES AG
Feldeggstrasse 4
CH-8034 Zürich(CH)

(72) Erfinder: Gabathuler, Jean-Pierre
Friedhofweg 2D
CH-8226 Schleitheim(CH)
Erfinder: Eckert, Karl-Ludwig
Plattenweg 32
CH-8200 Schaffhausen(CH)
Erfinder: Käser, Peter
Feldstrasse 45
CH-8200 Schaffhausen(CH)
Erfinder: Maurer, Albert
Egelseeweg 4
CH-8240 Thayngen(CH)
Erfinder: Fischer, Anton
Stimmerstrasse 76
CH-8200 Schaffhausen(CH)

(54) Verfahren zur Herstellung eines keramischen Schaumkörpers.

(57) Das Verfahren zur Herstellung eines offenporigen Schaumkörpers (10) mit einer dreidimensionalen, keramischen Netzstruktur (24), insbesondere als Filter für die Heissgasbehandlung oder als Katalysatorträger, geht von einem weichen offenporigen Kunststoff-Schaumblock (36) aus. Dieser wird wenigstens einmal mit einer Keramikaufschlämmung imprägniert, von überflüssiger Keramikaufschlämmung befreit und auf eine Temperatur unterhalb des Schmelzpunkts des Kunststoffs erwärmt und abschliessend bei Sintertemperatur der Keramik ausgebrannt.

Wenigstens eine Kunststoff-Schaumschicht (28, 38, 44, 46) wird imprägniert, unter Ausbildung eines Z-Flussfilters mit zwischen zwei Lagen angeordneten Strömungskanälen (14, 20) zu einem Kunststoff-Schaumblock (36) gefügt und gesintert.

Fig. 1

EP 0 412 930 A1

Xerox Copy Centre

## VERFAHREN ZUR HERSTELLUNG EINES KERAMISCHEN SCHAUMKÖRPERS

Die Erfindung bezieht sich auf ein Verfahren zur Herstellung eines offenporigen Schaumkörpers mit einer dreidimensionalen, keramischen Netzstruktur, insbesondere als Filter für die Heissgasbehandlung oder als Katalysatorträger, ausgehend von einem weichen, offenporigen Kunststoff-Schaumblock, welcher wenigstens einmal mit einer Keramikaufschlämmung imprägniert, von überflüssiger Keramikaufschlämmung befreit und auf eine Temperatur unterhalb des Schmelzpunkts des Kunststoffs erwärmt und abschliessend bei Sintertemperatur der Keramik ausgebrannt wird.

Bei bekannten Heissgas- bzw. Katalysebehandlungen hat es sich als vorteilhaft erwiesen, Filterkeramiken in Form von zylindrischen, stabil ausgebildeten Blöcken herzustellen. Solche Blöcke werden durch in bezug auf die Bewegungsrichtung des Gases wechselseitig vorne und hinten offene Bohrungen mit einer hohen inneren Oberfläche versehen, die eine ausreichende Durchströmbarkeit der Filterkeramik sicherstellt.

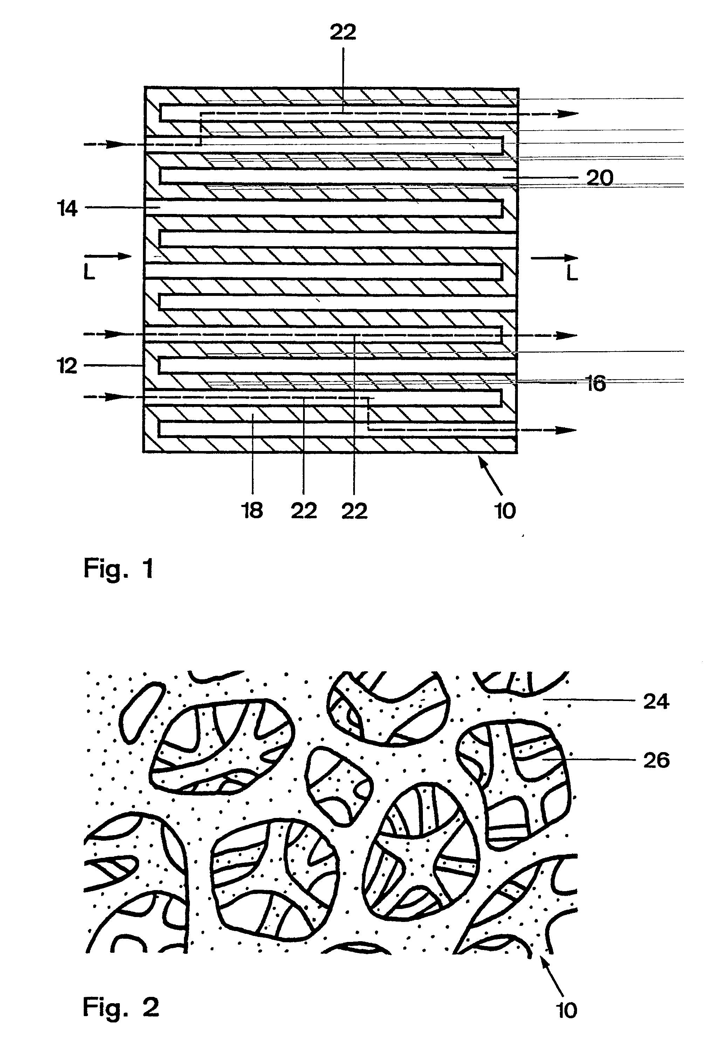

Das Prinzip der Heissgasfiltration bzw. Katalyse mit einer offenporigen Schaumkeramik geht aus Fig. 1 hervor, welche in bezug auf die Vorrichtung den Stand der Technik darstellt. Das in Längsrichtung durch den Schaumkörper 10 aus Keramik fliessende Gas, durch Pfeile L dargestellt, tritt auf der Eingangs-Stirnseite 12 in längslaufende Strömungskanäle 14 ein, welche in Richtung der Ausgangs-Stirnseite 16 des keramischen Schaumkörpers 10 verschlossen sind.

Das in den Strömungskanälen 14 aufgebaute Druckpotential bewirkt, dass das Gas durch die offenporigen Zwischenwände 18 des keramischen Schaumkörpers in benachbarte, ebenfalls längslaufende Strömungskanäle 20 übertritt, welche in Richtung der Ausgangs-Stirnseite 16 offen, in Richtung der Ein gangs-Stirnseite 12 dagegen geschlossen sind.

Anhand von punktierten Linien 22 wird der beispielsweise Weg von Gasmolekülen durch den keramischen Schaumkörper 10 gezeigt. Im weitaus überwiegenden Fall treten die Gasmoleküle von einem Strömungskanal 14 unter gesamthaft etwa vertikaler Ablenkung durch eine poröse Zwischenwand 18 in einen Strömungskanal 20, von wo sie abfliessen. Je nach dem Typ des Schaumkörpers werden beim Durchgang durch die poröse Zwischenwand 18 die Festbestandteile aus dem Gas entfernt oder eine katalytische Reaktion läuft ab.

Der Schaumkörpertyp gemäss Fig. 1 wird auch als Z-Flussfilter bezeichnet, wegen des vorwiegenden, im wesentlichen Z-förmigen Durchflusses der Gase durch die offenporige Keramikstruktur.

Ueberschreitet das Verhältnis der Länge zum Durchmesser der Strömungskanäle 14, 20 ein bestimmtes Verhältnis, beispielsweise 3 - 5, so treten mit üblichen Herstellungsverfahren für den keramischen Schaumkörper erhebliche Probleme auf. Nach üblichen Verfahren wird ein organischer Schaumstoff mit einer Keramikaufschlämmung getränkt und dann eine Kalzination durchgeführt, wobei der Schaumstoff ausbrennt. Je nach Ausführungsform der Schaumkeramik muss also vorerst eine entsprechende, weiche, Schaumstruktur aus organischem Material vorliegen.

Da für die Herstellung von präzisen, tiefen Bohrungen mit geringem Querschnitt übliche mechanische Bearbeitungsverfahren des weichen Kunststoffschaums nicht mehr anwendbar sind, mussten andere Herstellungswege beschritten werden.

Die japanische Offenlegungsschrift Nr. 61-222968 und die EP-A1 0192158 beschreiben ausführlich die Herstellung von organischen Schaumkörpern, welche in situ in einer Form aufgeschäumt werden. Die Nachteile dieses Verfahrens sind offensichtlich, es muss eine komplizierte Form hergestellt werden, das Verfahren ist arbeitsaufwendig und daher insgesamt teuer.

Die Erfinder haben sich die Aufgabe gestellt, ein Verfahren der eingangs genannten Art zu schaffen, welches die Anwendung von kostengünstigen Arbeitstechniken zur Erzeugung tiefer Strömungskanäle mit geringem Querschnitt ermöglicht und damit ein optimales Gleichgewicht von Druckverlust zu Wirkungsgrad ohne erhebliche Werkzeugkosten erlaubt.

Die Aufgabe wird erfindungsgemäss dadurch gelöst, dass wenigstens eine Kunststoff-Schaumschicht imprägniert, unter Ausbildung eines Z-Flussfilters mit zwischen zwei Lagen angeordneten Strömungskanälen zu einem Kunststoff-Schaumblock gefügt und gesintert wird.

Nach einer ersten bevorzugten Variante wird ein Kunststoff-Schaumband imprägniert, unter Ausbildung eines Z-Flussfilters mit zwischen den Bandwicklungen liegenden Strömungskanälen zu einem spiralförmigen Schaumblock gewickelt und gesintert.

Die vorgegebenen Aussenmasse des Kunststoff-Schaumbands, vorzugsweise aus Polyurethan, Polyester oder Polyäther, werden durch Schneiden oder Formschäumen in einfachen Formen erreicht. Die Aussenmasse der gewickelten, vorzugsweise zylinderförmigen Kunststoff-Schaumkörper liegen in der Praxis meist zwischen 50 und 500 mm, vorzugsweise zwischen 90 und 320 mm, für den Durchmesser und 100 - 400 mm, vorzugsweise 150 - 340 mm, für die Höhe. Die Porosität liegt zweckmässig im Bereich von 10 - 100 PPI, insbesondere 50 -80 PPI (PPI = Poren per Inch).

Zur Ausbildung der Strömungskanäle in vorgegebenem gegenseitigem Abstand können dünnwandige Rohre aus einem brennbaren Kunststoff, alternierend einends bündig mit einer schmalen Längsseite, in die Spiralwicklung des Kunststoff-Schaumbands geklemmt werden. Die Länge der Rohre ergibt etwa die Tiefe der vorgesehenen Strömungskanäle, welche in jedem Fall geringer ist als die Breite des Kunststoff-Schaumbands.

Es können beidseits offene oder einends verschlossene Rohre eingesetzt werden, wobei im zweiten Fall die Oeffnung bündig mit einer schmalen Längsseite ist.

Beim Sintern des imprägnierten Kunststoff-Schaumblocks werden die eingelegten Rohre mit der tragenden Netzstruktur aus Kunststoff ausgeheizt.

An einer Bandoberfläche können weiter präzise Nuten ausgespart werden, welche alternierend an einer schmalen Längsseite des Bandes offen, an der andern geschlossen sind. Beim Rollen des Kunststoff-Schaumbands, dem Fügen, bilden die vorzugsweise mechanisch oder thermisch ausgesparten Nuten mit der aufliegenden Bandwindung Strömungskanäle.

Die mechanische Bearbeitung erfolgt in an sich bekannter Weise zweckmässig durch Bohren, Fräsen, Sägen oder Schneiden.

Nach einer zweiten bevorzugten Variante der Erfindung werden Kunststoff-Schaumscheiben, vrzugsweise aus Polyurethan, Polyester oder Polyäther, zu einem Kunststoff-Schaumblock zusammengefügt. Eine erste Serie von Scheiben hat Löcher und/oder Schlitze. Eine zweite Serie von Scheiben hat alternierend einen Teil der Löcher und/oder Schlitze der Scheiben der ersten Serie, eine dritte Serie von Scheiben den restlichen Teil der Löcher und/oder Schlitze. Wenigstens eine Scheibe der ersten Serie wird einends mit einer Scheibe der zweiten Serie und andernends mit einer Scheibe der dritten Serie so zusammengefügt, dass sich von einer Stirnseite des Schaumkörpers bis in den Bereich der andern Stirnseite erstreckende blinde Aussparungen entstehen. Das Imprägnieren erfolgt vorzugsweise vor dem Zusammenfügen der Kunststoff-Schaumscheiben.

Die zusammenzufügenden Kunststoff-Schaumscheiben haben bevorzugt mechanisch oder thermisch ausgesparte Löcher und/oder Schlitze.

Beim Fügen von Kunststoff-Schaumschichten werden vorzugsweise parallel verlaufende Strömungskanäle gebildet, welche sich alternierend von einer Stirnseite des Kunststoff-Schaumblocks bis in den Bereich der andern Stirnseite erstrecken. Die Tiefe der Strömungskanäle liegt vorzugsweise bei wenigstens dem fünffachen Wert von deren kleinster Querschnittsabmessung bzw. dem Durchmesser einer Bohrung. Das Ende der Kanäle hat zweckmässig einen Abstand von der benachbarten Längsseite, der wenigstens dem gegenseitigen Abstand der Aussparungen entspricht. Damit wird verhindert, dass ein nennenswerter Teil des Gases direkt durch die Ausgangs-Stirnseite des gebildeten keramischen Schaumkörpers austritt (Fig. 1).

Die parallel verlaufenden Strömungskanäle können bezüglich des Querschnitts jede geometrische Form annehmen. Die Kanalwände können gerade oder sich verengend bzw. ausweitend verlaufen. Der Formenvielfalt sind lediglich bearbeitungstechnisch Grenzen gesetzt. Im einfachsten Fall hat ein Strömungskanal einen runden, halbrunden oder rechteckigen, insbesondere quadratischen oder nahezu quadratischen, Querschnitt, durch ein eingelegtes Rohr oder von einem Bohrer bzw. Fräser erzeugt. Die linearen Querschnittsabmessungen eines Strömungskanals liegen vorzugsweise bei 5 - 50 mm, inbesondere bei 6 - 15 mm.

Die gegenseitigen Abstände zwischen den parallel verlaufenden Strömungskanälen liegen bevorzugt im Bereich von 5 - 50 mm, insbesondere 6 - 15 mm. Der Abstand des Endes eines Ka nals von der benachbarten Stirnseite liegt vorzugsweise bei 10 - 50 mm, insbesondere 20 - 30 mm. Mit andern Worten ist ein Kanal 10 - 50 mm, vorzugsweise 20 - 30 mm, kürzer als die Gesamthöhe des entsprechenden Kunststoff-Schaumblocks. Sowohl die gegenseitigen Abstände zwischen den Kanälen als auch die Abstände von deren Ende zur benachbarten Stirnwand des Kunststoff-Schaumblocks sind in der Praxis jeweils etwa gleich gross.

Nach einem speziellen Herstellungsverfahren für Nuten in einem Kunststoff-Schaumband bzw. Löchern und/oder Schlitzen in Kunststoff-Schaumscheiben werden diese mit flüssigem Stickstoff oder flüssiger Luft ausgefroren, der versprödete Kunststoffschaum mechanisch bearbeitet und wieder aufgetaut. Weiter können die Poren des Kunststoffschaums mit einem bei Raumtemperatur flüssigen Medium, z.B. Wasser, gefüllt, das Medium ausgefroren, der Kunststoffschaum mit dem erstarrten Medium mechanisch bearbeitet, das Medium aufgetaut und aus den Poren des Kunststoffschaums entfernt werden.

Als Schichtkörper hergestellte Kunststoff-Schaumblöcke eignen sich insbesondere zur Herstellung von Dieselrussfiltern für Lastwagen, weil hier grosse Dimensionen die Regel sind.

Die Erfindung wird abgesehen von der auch den Stand der Technik darstellenden Figur 1 anhand der in der Zeichnung dargestellten weiteren Beispiele, welche auch Gegenstand von abhängigen Patentansprüchen sind, näher erläutert. Es zeigen schematisch:

- Fig. 2 eine stark vergrösserte Teil ansicht eines Keramikschaums,
- Fig. 3 ein Kunststoff-Schaumband mit ausgesparten Nuten,
- Fig. 4 einen Kunststoff-Schaumblock aus einem Band gemäss Fig. 3,
- Fig. 5 einen gewickelten Kunststoff-Schaumblock mit eingelegten, brennbaren Kunststoffrohren, und
- Fig. 6 einen auseinandergezogenen Kunststoff-Schaumblock aus Kunststoff-Schaumscheiben.

Der in Fig. 2 stark vergrössert dargestellte Schaumkörper aus Keramik zeigt die dreidimensionale Netzstruktur mit einem keramischen Gerippe 24, welches offene Poren 26 bildet. Die Porenzahl pro Längeneinheit wird so gewählt, dass für die betreffende Anwendung ein optimales Gleichgewicht in bezug auf Druckverlust und Wirkungsgrad besteht. Beim Durchströmen eines verunreinigten Gases bleiben die Festkörperpartikel haften, z.B. Dieselruss.

Die keramische Schaumkörperstruktur gemäss Fig. 2 hat eine sehr grosse wirksame Oberfläche, was das keramische Gerippe 24 auch als optimalen Katalysatorträger anbietet.

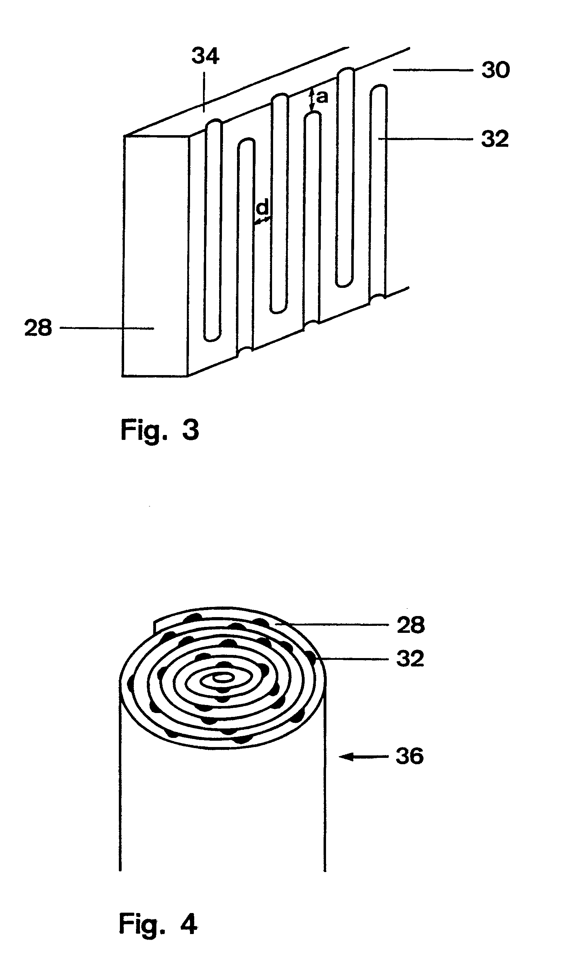

Das in Fig. 3 dargestellte Kunststoff-Schaumband 28 ist etwa 40 mm dick. An der einen Bandoberfläche 30 sind im Querschnitt halbkreisförmige Nuten 32 ausgespart, welche jeweils um den Abstand a weniger lang sind als das Kunststoffband 28 breit. Die Nuten 32 sind alternierend nach der einen oder der andern schmalen Längsseite 34 offen. Sowohl der Durchmesser der Nuten 32 als auch ihr gegenseitiger Abstand d beträgt je etwa 10 mm.

Fig. 4 zeigt ein zu einem grossformatigen Kunststoff-Schaumblock 36 spiralförmig aufgewickeltes Kunststoff-Schaumband 28, wobei die ausgesparten Nuten 32 auf der Innenseite des Kunststoff-Schaumbandes 28 liegen. Mit der Aussenfläche der nächst inneren Spiralwicklung bilden sie einen in bezug auf den Kunststoff-Schaumblock längslaufenden Strömungskanal. Es ist nur jede zweite, einen Strömungskanal bildende Nut 32 sichtbar, die anderen sind auf dieser Seite verschlossen.

Funktionell entspricht der aus dem Kunststoff-Schaumblock 36 hergestellte Schaumkörper 10 aus Keramik einem homogenen, ausgeschäumten keramischen Schaumstoff mit mechanischen Aussparungen.

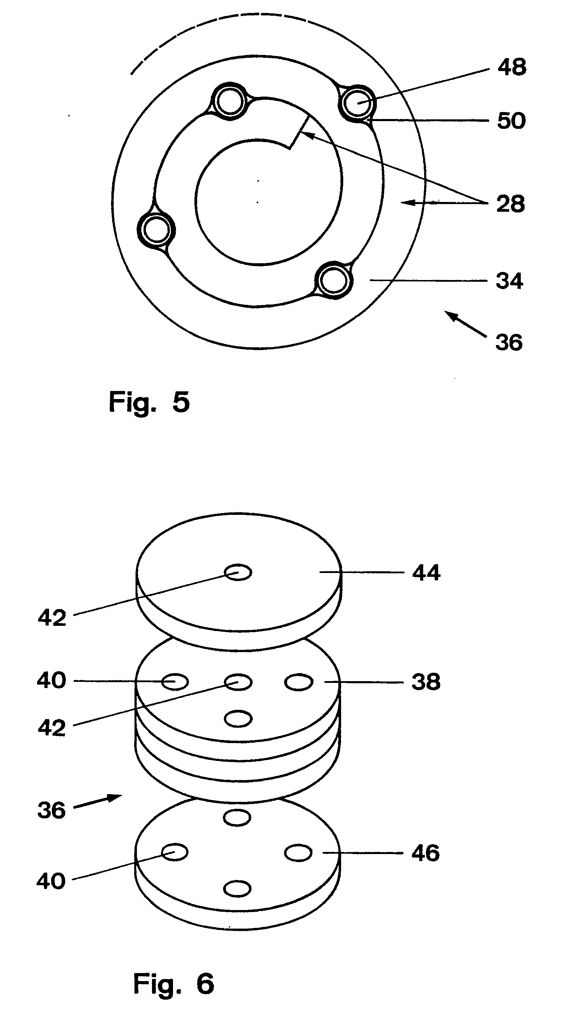

Fig. 5 zeigt den innersten Bereich eines grossformatigen Kunststoff-Schaumblocks 36, welcher aus einem spiralförmig aufgewickelten Kunststoff-Schaumband 28 besteht. Einfachheitshalber sind nur wenige Windungen gezeigt, die Forfsetzung ist gestrichelt angedeutet.

Zwischen den Wicklungen des Kunststoff-Schaumbands 28 sind dünnwandige Kunststoffrohre 48 eingeklemmt. Das Kunststoff-Schaumband 28 weist keine Nuten 32 (Fig. 3) auf, beim Wickeln drücken die Kunststoffrohre 48 entsprechende Ausbuchtungen in das Kunststoff-Schaumband 28.

Die beidseits offenen Kunststoffrohre 48 sind alternierend mit der oberen und unteren schmalen Längsseite 34 des Kunststoff-Schaumbands 28 bündig. Deshalb ist nur die Hälfte der eingelegten Kunststoffrohre 48 sichtbar.

Beim Sintern werden die Kunststoffrohre 48, wie die organische Netzstruktur, verbrannt. Dadurch entstehen im Prinzip Fig. 1 entsprechende Strömungskanäle 14, 20, welche auch die beim Einklemmen der Kunststoffrohre 48 entstandenen Freiräume 50 umfassen. Die offenporige Struktur des entstandenen Schaumkörpers aus Keramik erlaubt einen Uebergang der Gase von und zu den Strömungskanälen mit geringem Widerstand.

Fig. 6 zeigt scheibenförmig ausgebildeten Kunststoffschaum, der zu einem grossformatigen Kunststoff-Schaumblock 36 zusammengesetzt wird. Einfachheitshalber sind nur wenige Bohrungen durch die Kunststoff-Schaumscheiben gezeichnet, damit das Prinzip besser erkannt werden kann. In Wirklichkeit enthalten die Scheiben eines grossformatigen Kunststoff- Schaumblocks einige Dutzend Bohrungen.

Mehrere Kunststoff-Schaumscheiben 38 mit einer zentralen Bohrung 40 und vier peripheren Bohrungen 42 sind so aufeinander angeordnet, dass die Bohrungen einen durchgehenden Strömungskanal bilden. Einends ist eine Kunststoff-Schaumscheibe 44 mit lediglich einer zentralen Bohrung 42, andernends eine Kunststoff-Schaumscheibe 46 mit vier peripheren Bohrungen 40 vorgesehen. Die Bohrungen der beiden endständigen Kunststoff-Schaumscheiben 44, 46 passen beim Zusammenfügen jeweils auf die entsprechenden Bohrungen der Kunststoff-Schaumscheiben 38.

Bei zusammengefügten Kunststoff-Schaumscheiben 38, 44, 46 ist eine zentrale Bohrung 42 von oben offen und unten geschlossen, vier periphere Bohrungen 40 dagegen sind von unten offen und oben geschlossen. So kann ein grossformatiger Schaumkörper aus Keramik hergestellt werden, welcher im Verhältnis zur Länge sehr dünne Strömungskanäle hat.

Ausführungsbeispiele

1. Ein Dieselrussfilter für ein Personenauto, ein Schaumfilter aus Keramik, hat eine Porosität von 70 PPI. Der Aussendurchmesser beträgt 160 mm, die Höhe 170 mm. Der zu sinternde Kunststoff-Schaumblock wird aus einem Schaumband ohne Kanäle gewickelt. Bündig mit jeder schmalen Längsseite des Bandes werden 18 Kunststoffrohre aus Polyäthylen eingelegt, welche bei einer Wandstärke von 0,5 mm einen Innendurchmesser von 8 mm haben. Die Länge der Kunststoffrohre beträgt 145 mm, der gegenseitige Abstand 10 mm.

2. Ein Dieselrussfilter für einen Lastwagen, ein keramischer Schaumfilter, hat ebenfalls eine Porosität von 70 PPI. Er hat einen Durchmesser von 295 mm und eine Höhe 330 mm. Der zu sinternde Kunststoff-Schaumblock wird aus einem Schaumband ohne Kanäle gewickelt. Bündig mit jeder schmalen Längsseite des Bandes sind 41 Kunststoffrohre aus Polyäthylen eingelegt, welche bei einer Wandstärke von 0,5 mm einen Innendurchmesser von 8 mm haben. Die Länge der Kunststoffrohre beträgt 305 mm, das nicht bündige Ende ist also 25 mm von der benachbarten Stirnseite entfernt. Der gegenseitige Abstand zwischen den Rohren beträgt 10 mm.

**Ansprüche**

1. Verfahren zur Herstellung eines offenporigen Schaumkörpers (10) mit einer dreidimensionalen, keramischen Netzstruktur (24), insbesondere als Filter für die Heissgasbehandlung oder als Katalysatorträger, ausgehend von einem weichen offenporigen Kunststoff-Schaumblock (36), welcher wenigstens einmal mit einer Keramikaufschlämmung imprägniert, von überflüssiger Keramikaufschlämmung befreit und auf eine Temperatur unterhalb des Schmelzpunkts des Kunststoffs erwärmt und abschliessend bei Sintertemperatur der Keramik ausgebrannt wird,
dadurch gekennzeichnet, dass
wenigstens eine Kunststoff-Schaumschicht (28, 38, 44, 46) imprägniert, unter Ausbildung eines Z-Flussfilters mit zwischen zwei Lagen angeordneten Strömungskanälen (14, 20) zu einem Kunststoff-Schaumblock (36) gefügt und gesintert wird.

2. Verfahren nach Anspruch 1, dadurch gekennzeichnet, dass ein Kunststoff-Schaumband (28) imprägniert, unter Ausbildung eines Z-Flussfilters mit zwischen den Bandwicklungen liegenden Strömungskanälen (14, 20) zu einem spiralförmigen Kunststoff-Schaumblock (36) aufgewickelt und gesintert wird.

3. Verfahren nach Anspruch 2, dadurch gekennzeichnet, dass zur Ausbildung der Strömungskanäle (14, 20) in vorgegebenem gegenseitigen Abstand (d) dünnwandige Rohre (48) aus einem brennbaren Kunststoff, alternierend einends mit einer schmalen Längsseite (34) bündig, in die Spiralwicklung des Kunststoff-Schaumbands (28) geklemmt werden, wobei die Länge der Rohre (48) etwa der Tiefe der Strömungskanäle (14, 20) entspricht.

4. Verfahren nach Anspruch 3, dadurch gekennzeichnet, dass einends geschlossene Rohre (48), mit bündiger Oeffnung, in die Spiralwicklung des Kunststoff-Schaumbands (28) geklemmt werden.

5. Verfahren nach Anspruch 2, dadurch gekennzeichnet, dass ein Kunststoff-Schaumband (28) mit an einer Bandoberfläche (30) präzis ausgesparten Nuten (32) zum Fügen gerollt wird, welche Nuten (32) alternierend an einer schmalen Längsseite (34) des Bandes offen, an der andern geschlossen sind.

6. Verfahren nach Anspruch 5, dadurch gekennzeichnet, dass ein mit mechanisch oder thermisch ausgesparten Nuten (32) versehenes Kunststoff-Schaumband (28) zum Fügen gerollt wird.

7. Verfahren nach Anspruch 1, dadurch gekennzeichnet, dass scheibenförmige Kunststoff-Schaumschichten (38, 44, 46), welche eine erste Serie von Scheiben (38) mit Löchern und/oder Schlitzen (40, 42), eine zweite Serie von Scheiben (44) mit alternierend je einem Teil der Löcher und/oder Schlitze (40,42), und eine dritte Serie von Scheiben (46) mit dem anderen Teil der Löcher und/oder Schlitze (40, 42) der ersten Serie von Scheiben (38) umfassen, zu einem Kunststoff-Schaumblock (36) gefügt werden, indem wenigstens eine Scheibe (38) der ersten Serie mit einer Scheibe (44) der zweiten Serie einends und einer Scheibe (46) der dritten Serie andernends so zusammengefügt werden, dass sich von einer Stirnseite (12, 16) des Schaumkörpers (36) bis in den Bereich der andern Stirnseite (16, 12) erstreckende blinde Aussparungen (14, 20) entstehen, wobei das Imprägnieren vorzugsweise vor dem Zusammenfügen der Kunststoff-Schaumscheiben (38, 44, 46) erfolgt.

8. Verfahren nach Anspruch 7, dadurch gekennzeichnet, dass Kunststoff-Schaumscheiben (38, 44, 46) mit mechanisch oder thermisch ausgesparten Löchern und/oder Schlitzen (40, 42) zusammengefügt werden.

9. Verfahren nach einem der Ansprüche 1 - 8, dadurch gekennzeichnet, dass die Strömungskanäle (14, 20) mit Querschnittsabmessungen von 5 - 50 mm, vorzugsweise 6 -15 mm, wenigstens fünfmal so tief wie die kleinste Querschnittsabmessung und gegenseitigen regelmässigen Abständen (d) im Bereich von 5 - 50 mm, vorzugsweise 6 -15 mm, ausgebildet werden.

10. Verfahren nach einem der Ansprüche 2 - 9, dadurch gekennzeichnet, dass das Kunststoff-Schaumband (28) bzw. die Kunststoff-Schaumscheiben (38, 44, 46) mit flüssigem Stickstoff oder flüssiger Luft ausgefroren, der versprödete Kunststoffschaum mechanisch bearbeitet und wieder aufgetaut wird, oder die Poren (26) des Kunststoffschaums mit einem bei Raumtemperatur flüssigen Medium gefüllt, das Medium ausgefroren, der Kunststoffschaum mit dem erstarrten Medium mechanisch bearbeitet, das Medium aufgetaut und aus den Poren des Kunststoffschaums entfernt wird.

Fig. 1

Fig. 2

Fig. 3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 527 872 (NIPPONDENSO) <br> * Seite 8, Zeile 20 - Seite 9, Zeile 27; Figur 1 * <br> – – – | 1 | C 04 B 38/00 <br> B 01 D 39/20 <br> B 28 B 1/00 <br> B 28 B 7/34 |
| D,X | EP-A-0 192 158 (NIPPONDENSO) <br> * Seite 8, Zeilen 12 - 23; Anspruch 1 * <br> – – – | 1 | |
| Y | LU-A-2 907 2 (N.V.PHILIPS) <br> * Anspruch 1 * <br> – – – | 1-3 | |
| Y | DE-C-3 600 048 (E.DITTRICH KG) <br> * Spalte 3, Zeilen 50 - 59; Anspruch 1 * <br> – – – | 1-3 | |
| A | EP-A-0 265 777 (GTE LABORATORIES) <br> * Anspruch 1 * <br> – – – – – | 7 | |

| RECHERCHIERTE SACHGEBIETE (Int. Cl.5) |
|---|
| C 04 B <br> B 01 D <br> B 28 B <br> F 01 N |

Der vorliegende Recherchenbericht wurde für alle Patentansprüche erstellt

| Recherchenort | Abschlußdatum der Recherche | Prüfer |
|---|---|---|
| Den Haag | 06 November 90 | THEODORIDOU E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument